(19) Europäisches Patentamt
European Patent Office
Office européen des brevets

(11) **EP 3 251 524 A1**

(12) **EUROPEAN PATENT APPLICATION**

(43) Date of publication:
**06.12.2017 Bulletin 2017/49**

(51) Int Cl.:
***A23L 3/10*** (2006.01)

(21) Application number: **16172180.8**

(22) Date of filing: **31.05.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **BillerudKorsnäs AB**
**169 27 Solna (SE)**

(72) Inventor: **Mäkelä, Petri**
**SE-755 93 Uppsala (SE)**

(74) Representative: **Kransell & Wennborg KB**
**P.O. Box 27834**
**115 93 Stockholm (SE)**

(54) **RETORT AND METHOD THEREFOR**

(57) The present disclosure relates to a method for retorting a package 2 of a porous packaging material 3. The method comprises providing the package in a chamber 4 of a retort 1. The method also comprises, in the chamber, raising the temperature, from a first temperature to a second temperature, and the pressure, from a first pressure to a second pressure, such that gas in the porous packaging material is subjected to a volume change which is less than 50% by volume. The present disclosure also relates to a retort configured for performing such a method.

Fig. 5

**Description**

**TECHNICAL FIELD**

The present disclosure relates to a method and a retort for retorting a package of a porous packaging material.

**BACKGROUND**

A food package can be sterilized by retorting, meaning that the filled package is heated up to a high temperature (typically 116-130°C) for a certain duration in order to inactivate fungi, bacteria, viruses and bacterial spores. This treatment is made to ensure that the packed food is safe to consume, the packaging material is able to efficiently protect the packed food and to give the packed product long shelf-life. Retorting of packed food is performed by placing the filled package in a retort, where it is subjected to saturated steam and spraying of tempered water in a predetermined sequence, involving increased pressure levels.

Retorting has been used for a long time as method to sterilize food products packed in non-moisture sensitive packages, such as metal cans and glass jars. More recently, as disclosed in e.g. in documents WO1998016431, WO2004056666 and WO2006108812, use of a paper-based retortable package has been commenced. Such a paper-based package consists of a paperboard for retorting applications which is laminated on the inside with polymer and aluminium foil layers and on the outside with polymer layers. The inside lamination provides barrier protection of the packed food.

The inside and outside package surfaces of the involved paperboard are protected against moisture and water during retorting by the inside and outside laminate layers, but leaving its through-thickness edges exposed to the external retort environment. The used paperboard is tailor-made to prevent water penetration by capillary sorption (a fast penetration process), but cannot prevent soaking driven by diffusion (a slow penetration process).

A sporadically occurring problem for paper-based packaging is that the package exhibits sogginess after retorting, meaning that the package has partially (e.g. at corners or creases) or completely lost its structural stiffness and strength after retorting. When observing such soggy packages in more detail, it has been observed that the soggy areas of the packaging material exhibit through-thickness delamination and high moisture content. The sogginess of the package is irreversible, i.e. the package appears soggy also after it has dried out. Agitation or rotation of packages during retorting, which is preferably done to heat the packed product more uniformly and thereby improve the retorted product quality and shorten the retorting cycle time, makes it even more challenging to prevent occurrence of soggy packages.

**SUMMARY**

Filled paper-based retortable packages that occasionally or frequently exhibit sogginess after retorting involves a serious robustness problem. When a package exhibits sogginess after retorting, its likeliness to be crushed in subsequent handling (e.g. transportation and conveyor belts) increases, the integrity of the packed food product is threatened, and the appearance of the package is deteriorated so that it becomes unattractive to the potential consumer. Today, there are no methods available for estimating the risk for sogginess before retorting of the filled package. The retorting is performed by the filler of the product, so complaints and claims will come back from the very end of the value chain (the food is already packed, labelled and sterilized before the defect is observed). Sogginess of food packages after retorting constitutes a costly obstacle in the paper-based retorted food packaging business value chain, involving fillers, suppliers of filling machines and autoclaves, converters of packages and packaging material, and suppliers of machinery and raw materials (e.g. paperboard, polymers, aluminium foil, ink etc.).

It is an objective of the present disclosure to provide an improved method for retorting packages of a porous packaging material, typically already filled with a food product, to reduce the risk of moisture uptake in the package material which results in sogginess.

In accordance with an aspect of the present disclosure, there is provided a method for retorting a package of a porous packaging material. The method comprises providing the package in a chamber of a retort. The method also comprises, in the chamber, raising the temperature, from a first temperature to a second temperature, and the pressure, from a first pressure to a second pressure, such that gas in the porous packaging material is subjected to a volume change which is less than 50% by volume.

In accordance with another aspect of the present disclosure, there is provided a retort for retorting a package of a porous packaging material. The retort comprises processor circuitry, and a storage storing instructions executable by said processor circuitry whereby said retort is operative to in a chamber of the retort, raising the temperature, from a first temperature to a second temperature, and the pressure, from a first pressure to a second pressure, such that gas in the porous packaging material is subjected to a volume change which is less than 50% by volume. The retort may be configured for performing embodiments of the method of the present disclosure.

The gas in the porous packaging material has an initial volume (corresponding to an initial density) at the first temperature and pressure. Upon being subjected to the raising of temperature and pressure, the volume and density of this gas (consisting of the gas molecules within the porous packaging material at the first temperature and pressure) may be affected, thus giving a volume change (and a corresponding density change) of the gas, typically substantially in accordance with the ideal gas law. In accordance with the present invention, this volume/density changed is reduced. If, in accordance with prior art, the gas volume is greatly compressed (and thus the density increased), there is a risk that moisture is sucked into the packaging material, resulting in undesirable sogginess. Less volume change (usually compression), e.g. less than 50%, 40%, 30%, 20% or 10% by volume, gives a reduced risk of such sogginess. Preferably, the volume/density of the gas is not subjected to a volume change at all, i.e. the raising of the temperature and pressure to the second temperature and pressure is done in an isochoric process. Also an increase in volume (and corresponding reduction in density) may be undesirable since this would lead to a compression in another stage of the retorting process and a risk of sucking in moisture in said other stage. In accordance with embodiments of the present disclosure, the risk of soggy porous, e.g. fibrous (i.e. fibre-based or fibre containing), packages after retorting is reduced or even eliminated. In accordance with the present disclosure, fibre-based packages may also be agitated (e.g. shaken or rotated) during retorting, without increased risk of sogginess, which may enable shortening of the retorting cycle time. The risk of layer delamination or blistering may also be reduced in accordance with embodiments of the present disclosure.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

BRIEF DESCRIPTION OF THE DRAWINGS

Embodiments will be described, by way of example, with reference to the accompanying drawings, in which:

Fig 1 is a graph over temperature and pressure during a retorting cycle according to prior art.

Fig 2 is a graph over the gas volume to initial gas volume ratio within the porous packaging material during the retorting cycle of fig 1.

Fig 3a is a graph over temperature and pressure during an embodiment of a retorting cycle in accordance with the present disclosure.

Fig 3b is a graph over the gas volume to initial gas volume ratio within the porous packaging material during the retorting cycle of fig 3a.

Fig 4a is a graph over temperature and pressure during another embodiment of a retorting cycle in accordance with the present disclosure.

Fig 4b is a graph over the gas volume to initial gas volume ratio within the porous packaging material during the retorting cycle of fig 4a.

Fig 5 is an illustration of an embodiment of a retort loaded with a package, in accordance with the present disclosure.

Fig 6 is a schematic sectional side view of a part of an embodiment of a packaging material in accordance with the present disclosure.

Fig 7 is a schematic block diagram of an embodiment of a retort in accordance with the present disclosure.

Fig 8 is a schematic flow chart of embodiments of a method in accordance with the present disclosure.

**DETAILED DESCRIPTION**

Embodiments will now be described more fully hereinafter with reference to the accompanying drawings, in which certain embodiments are shown.

However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

The term "retort", as used herein, denotes the autoclave or pressure cooker which is used in e.g. the food industry for sterilization (by retorting) of a canned product under high temperature. Alternative terms include autoclave, pressure cooker and canning retort. In accordance with embodiments of the present disclosure, the traditional can is replaced with a fibrous/paper based package.

That the package is fibrous implies that it is at least partly made from a fibrous/fibre material such as a cellulose/paper-based material e.g. paper board.

The packaging material for paper-based retortable packages may be built up as a laminate consisting of several different layers, each fulfilling important functional requirements. One of these layers, the paperboard, is porous, i.e. it contains a relatively large volume fraction of gas phase. The volume of the gas phase within the packaging material is affected both by pressure and temperature, as described below:

- When the ambient pressure is increased at constant temperature of the packaging material (isothermal process), the volume of the gas phase decreases.

- When the temperature of the packaging material is increased at constant ambient pressure (isobaric process), the volume of the gas phase increases.

It might also be argued that increased ambient pressure results in mechanical compression of the packaging material, thereby reducing the volume available for the gas phase in the packaging material, but it may be shown that this effect is negligible, or at least of less significance, at typical retorting pressure levels of a few bars, and even more negligible when considering that this effect constitutes a transient perturbation of the equilibrium state that requires both large and rapid changes of the pressure level to become significant.

The following happens when the volume of the gas phase in the packaging material changes:

- Underpressure is created in the packaging material when the available gas phase volume decreases. This underpressure strives at sucking in gas (or liquid) from the environment external to the package into the packaging material, mainly via the through-thickness edges (which are not protected by the polymer laminate layers, and other possible easy-access passages, such as pin holes, perforations or damages in the polymer laminate layers.

- Overpressure is created in the packaging material when the available gas phase volume increases. This overpressure strives at pushing out gas from within the packaging material to the external environment. The overpressure also subjects the packaging material to out-of-plane tension, creating a risk of delamination e.g. blistering.

At a first view, it might seem advantageous that gas is pushed out of the packaging material, but it should then be remembered that if gas is pushed out at one stage of a pressure-temperature cycle, then gas must be sucked in at another stage of the cycle, before returning to equilibrium at the initial pressure and temperature.

In retorting of paper-based packaging, both pressure and temperature may be changed concurrently. Under such conditions, the ideal gas law can be used to monitor the volume change of the gas phase within the packaging material. The ideal gas law is expressed as:

$$pV = nRT \qquad\qquad (1)$$

where

- $p$ denotes the pressure of the gas, in Pascal.

- $V$ denotes the volume of the gas, in cubic metres.

- n denotes the amount of substance of the gas, in moles.

- R denotes the ideal gas constant, which is 8.3145 Pa*m3/(mol*K).

- T denotes the temperature of the gas, in Kelvin.

The ideal gas law may be used to analyse the volume change of the gas phase in the packaging material during retorting. When such analysis is restricted to studying the gas phase substance that was occupying the packaging material at the start of the retorting process, meaning that a constant amount of substance of gas is studied, then the ideal gas law may be rewritten as:

$$V = C^*T/p \qquad (2)$$

where C is a constant.

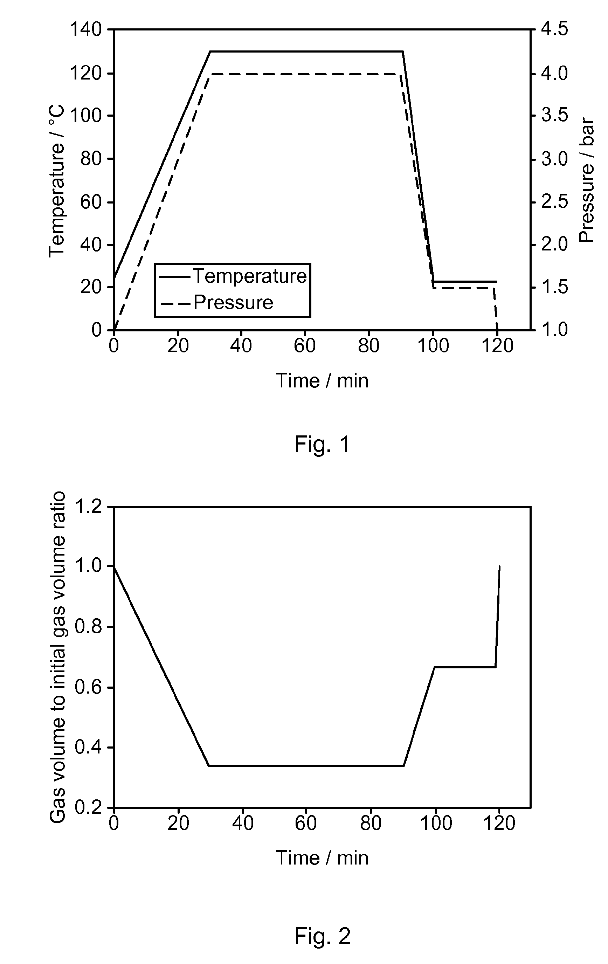

In figure 1, idealized temperature and pressure histories from retorting of filled paper-based packages are shown. The pressure signal is measured by pressure sensors in the retort chamber and the temperature signal is measured by temperature sensors in the retort chamber that monitor the temperature of the water that is sprayed and splashed on the packages during the retorting. Henceforth, it is assumed that the packaging material exhibits the same temperature as the water, although the packaging material temperature in practice lag the water temperature change slightly. As seen in the figure, the retorting cycle is started by a heating event phase (30 min temperature increase from ambient/room temperature to 130°C), followed by high-temperature hold phase (constant temperature of 130°C for 1 hour), followed by a cooling phase (10 min linear temperature decrease from 130°C to ambient/room temperature), and ended with a low-temperature hold phase (constant temperature of 23°C for 20 min). The pressure follows a similar history, with a start and end value of 1 bar and a peak value of 4 bar.

The gas volume change within the packaging material during retorting can be calculated based on equation 2 and the data in figure 1. Such data are presented in figure 2, as the gas volume to the initial gas volume ratio (also called gas volume ratio) versus retorting time. As the figure shows, the gas volume in the packaging material decreased linearly during the heating phase (since the increased pressure affects the volume more than the increased temperature), reaching a value of roughly one third of the initial gas volume at the end of the heating phase, indicating that at this stage two thirds of the available volume within the packaging material had been replaced by moist air and (possibly) water sucked in from the retorting chamber atmosphere. This sucked in moist air and water then stays within the packaging material during the complete high-temperature hold phase, giving 1 hour for sorption and diffusion mechanisms to occur. The paperboard becomes wet and the fibres swell, resulting in that the in-plane permeability of the paperboard is decreased. During the subsequent cooling event, the gas within the paperboard expands to the double size during 10 min, and in a last pressure decrease phase, the gas expands rapidly an additional 50% when the retort chamber is opened to the ambient atmosphere. These gas expansion phases may trigger blistering-type delamination in soggy regions of the packaging material.

The present disclosure relates to a strategy to counteract moist air and water being sucked into the packaging material during retorting. This may be achieved by co-varying the temperature and pressure in the retort chamber such that the gas volume within the packaging material remains substantially constant (isochoric process) during the retorting. Such a process is exemplified below by re-using the temperature curve from the previously described retorting cycle of figures 1 and 2, but modifying the pressure curve so that the retorting cycle becomes isochoric. Since the gas volume is constant in an isochoric process, equation 2 may be rewritten as:

$$T/p = D \qquad (3)$$

where D is a constant.

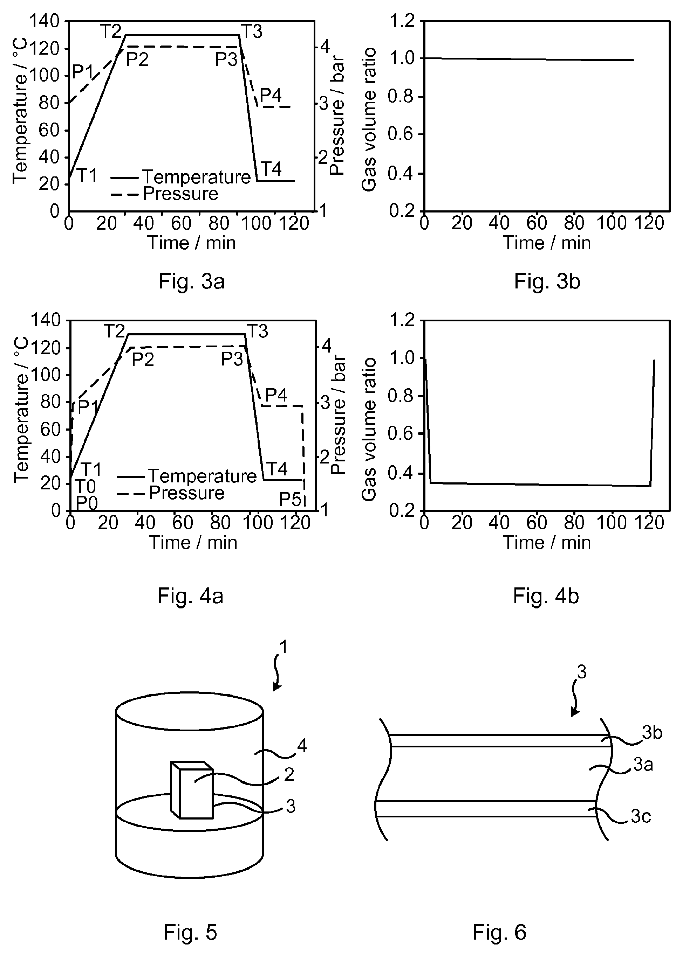

If it is assumed that the high-temperature hold phase is still performed at 130°C and 4 bar. Then, according to equation 3, the prevailing temperature (in Kelvin) to pressure ratio at this high-temperature hold phase should be retained also during other phase(s) of the retorting cycle in order for the process to be isochoric. Figures 3a and 3b show the temperature, pressure and volume change of such a retorting cycle. The retorting cycle of figures 3a and 3b comprises the following phases:

- An isochoric temperature and pressure raising phase, in which (in the chamber of the retort) the temperature is raised from a first temperature T1 to a second temperature T2 while (concurrently) the pressure is raised from a first pressure P1 to a second pressure P1.

- A high temperature hold phase, which in this example has a duration of an hour, where the temperature and pressure may remain constant (or alternatively may co-vary somewhat up or down but preferably also isochorically). Thus, the second temperature T2 and the second pressure P2, respectively, may be substantially the same as the third temperature T3 and the third pressure P3, at the end of the high temperature hold phase.

- A (preferably) isochoric temperature and pressure reducing phase, in which (in the chamber of the retort) the temperature is reduced from the third temperature T3 to a fourth T4 while (concurrently) the pressure is reduced from the third pressure P3 to a fourth pressure P4.

As seen in the figures, the driving force for sucking moist air and water into the packaging material has been removed, since the gas phase volume in the packaging material stays constant during the complete retorting cycle.

However, the suggested isochoric process in figures 3a and 3b starts and ends at a pressure level above ambient, which means that an initial pressure increase phase and a final pressure decrease phase need to be added to the cycle. The ambient pressure P0 is here typically the pressure outside of the retort chamber 4 e.g. atmospheric pressure. Such a cycle is exemplified in figures 4a and 4b. The retorting cycle of figures 4a and 4b thus comprises the following phases:

- The initial pressure raising phase in which the pressure is raised from the initial (typically ambient) pressure P0 to the first pressure P1. The initial temperature (typically ambient/room temperature) T0 may be the same as the first temperature T1.

- The isochoric temperature and pressure raising phase may then be as in respect of figures 3a and 3b.

- The high temperature hold phase may be as in respect of figures 3a and 3b.

- The temperature and pressure reducing phase may be as in respect of figures 3a and 3b.

- The final pressure decreasing phase in which the pressure is reduced from the fourth pressure P4 to an end/fifth pressure (typically ambient) P5, which may be the same as the initial pressure P0. During this phase, the temperature may remain constant (typically ambient) or continue to cool down to ambient temperature.

As seen in figure 4b, the addition of these two phases create a gas volume change in the packaging material, at the start and end, respectively, of the cycle. However, this gas volume change may not result in sogginess as long as the atmosphere in the retort chamber is sufficiently dry during the initial pressure increasing phase, from P0 to P1, when external gas is sucked into the packaging material (e.g. before starting to spray or steam water on the package). Additionally, the final pressure release phase (from P4 to ambient pressure P5) may be performed slow enough to reduce the risk of blistering (delamination), which may anyway not be critical if the paperboard has been kept dry during the retorting cycle.

Figure 5 schematically illustrates an embodiment of a retort 1 loaded with a fibrous package 2 in the chamber 4 of the retort. The package 2 is made from a fibrous packaging material 3. The retort is configured to be able to disconnect the atmosphere in its chamber 4 from the ambient atmosphere, such that the temperature and pressure in the chamber 4 can be controlled. The retort may also be configured for agitating, e.g. rotating or shaking, the package 2 while in the chamber. The retort may also be configured for subjecting the package 2 to steam and/or water of a controlled temperature in the chamber.

Figure 6 schematically shows a cross-section or edge of a part of an embodiment of a laminate packaging material 3. At such an edge, a porous material may take up moisture during the prior art cycle discussed in respect of figures 1 and 2. The laminate material 3 comprises a porous, e.g. fibrous, sheet 3a, e.g. a cellulose-based or cellulose containing sheet such as paper or paperboard, which may be pigment coated on the top side or the bottom side or on both the top and bottom side. The porous sheet may also involve other surface treatments, such as binders, barriers, sizing agents, etc. The sheet outer surface may or may not be printed. The outside surface of the fibrous sheet 3a is protected from moisture and water by an outer barrier layer 3b, which may be composed by one or several plies that ensure the required barrier (moisture and water), mechanical, adhesion, sealing, printing and appearance properties of the outer layer. The outer layer is commonly mainly composed by thermoplastic polymers. The inside surface of the fibrous sheet 3a is protected from moisture and water by an inner barrier layer 3c, which generally is composed by several plies that together ensure the required barrier (moisture, water, gas, UV-light, odour, taste, etc.), mechanical, adhesion and sealing properties of the inner layer. Any number of laminate layers may be comprised in the material 3, e.g. two or more outer polymer layers 3b and/or two or more inner polymer layers 3c. The inner layer may e.g. be composed by thermoplastic polymers and aluminium foil.

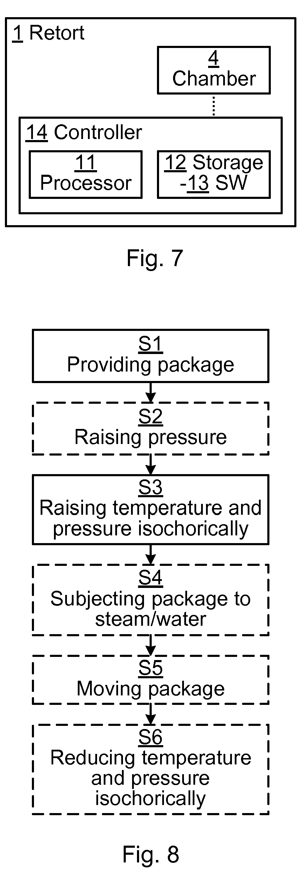

Figure 7 is a block diagram schematically illustrating an embodiment of a retort 1 of the present disclosure. The retort 1 comprises, in addition to the chamber 4, a controller 14 for controlling the temperature and pressure in the chamber 4, as well as any agitation, steam and/or water which the package 2 is subjected to in said chamber. The controller 14 comprises processor circuitry 11 e.g. a central processing unit (CPU). The processor circuitry 11 may comprise one or a plurality of processing units in the form of microprocessor(s). However, other suitable devices with computing capabilities could be comprised in the processor circuitry 11, e.g. an application specific integrated circuit (ASIC), a field programmable gate array (FPGA) or a complex programmable logic device (CPLD). The processor circuitry 11 is configured to run one or several computer program(s) or software (SW) 13 stored (e.g. pre-programmed) in a storage 12 of one or several storage unit(s) e.g. a memory. The storage unit is regarded as a computer readable means and may e.g. be in the form of a Random Access Memory (RAM), a Flash memory or other solid state memory, or a hard disk, or be a combination thereof. The processor circuitry 11 may also be configured to store data in the storage 12, as needed.

Thus, in accordance with an aspect of the present disclosure, there is provided a retort 1 for retorting a package 2 of a porous packaging material. The retort comprises processor circuitry 11, and a storage 12 storing instructions 13 executable by said processor circuitry whereby said retort is operative to in a chamber 4 of the retort, raising the temperature, from a first temperature T1 to a second temperature T2, and the pressure, from a first pressure P1 to a second pressure P2, such that gas in the porous packaging material is compressed less than 50% by volume, preferably in a substantially isochoric process.

Figure 8 is a schematic flow chart illustrating embodiments of the method of the present disclosure for retorting a package 2 of a porous packaging material 3. The package 2 is provided S1 in a chamber 4 of a retort 1. The retort may be of any suitable type for retorting e.g. food/drink containing packages, for instance a type of retort commercially available for retorting packages of metal (cans) or glass (jars).

The temperature and pressure is raised S3 in the chamber 4 holding the package 2. The temperature is raised from a first temperature T1 (e.g. ambient or room temperature) to a second temperature T2 (e.g. the desired temperature needed to conserve a food product enclosed in the package 2), and the pressure is raised from a first pressure P1 to a second pressure P2, such that gas in the porous packaging material is compressed less than 50% by volume (i.e. the gas volume is no more than halved compared with the initial volume at first temperature T1 and first pressure P1). This implies that the temperature and pressure are raised in coordination with each other, in view of e.g. the ideal gas law of equations (1)-(3), above, in order to reduce the compression of the gas residing in the porous packaging material in order to reduce the amount of gas sucked into the material (e.g. at less protected edges of the material, as discussed above) from the chamber 4 during this phase of the retorting cycle. As discussed above, the atmosphere in the chamber 4 is typically wet or humid in order to improve heat transfer to the package 2 and time efficiently heat the content of the package (typically a food/drink product).

If the gas in the porous material is compressed even less, less volume reduction, less moist gas or water from the chamber 4 risk being sucked into the packaging material. Thus, the compression is preferably less than 50%, such as less than 30%, 20% or 10%, or the raising S3 of the temperature and the pressure is done in an isochoric, or a substantially isochoric, process.

It may also be desirable to not allow the gas in the material to expand, e.g. to reduce the risk of blistering or to avoid compression of the gas during the subsequent cooling phase, why the gas in the porous packaging material should preferably be compressed more than -10% (i.e. less than a 10% expansion).

Since the gas whose compression risks sucking in moisture into the material is in contact with the atmosphere in the chamber 4, the discussion about expansion and compression of the gas in the material is valid for the expansion and compression of the gas in the chamber 4. Thus, the expansion or compression of the gas in the material can be calculated based on measurements on temperature and pressure in the atmosphere in the chamber 4.

However, it should be noted that any product enclosed in the package may lag behind e.g. 10-20°C during the heating phase S3, compared with the temperature in the chamber atmosphere, depending on the size of the package.

In some embodiments, the pressure is raised S2 in the chamber 4, holding the package 2, from ambient pressure P0 to the first pressure P1 before the raising S3 of the temperature from the first temperature T1 to the second temperature T2. The first pressure P1 is thus above the ambient pressure (outside the chamber 4). This may be in order to reduce the compression of the gas in the material during the raising S3 of the temperature, and may even allow the raising S3 of the temperature to be an isochoric process. This raising S2 of the pressure may be done at constant, or substantially constant, temperature, e.g. at the first temperature T1 (e.g. room temperature). Preferably, the raising S2 of the pressure is done when the atmosphere in the chamber 4 is relatively dry, e.g. before any steam or water is introduced into the chamber 4, so that moisture is not sucked into the packaging material as the volume of the gas initially in the material is compressed as a result of the increased pressure. The temperature will not be largely affected, and the relative humidity will stay low, when increasing the pressure by inlet of compressed air rather than steam. The temperature itself during the pressure raising may not be of critical importance, but the combination of high relative humidity at high temperature may be important, since air at ambient/room temperature cannot hold much water. It may thus be preferred that the gas in the chamber, which may get sucked into the material 3 is relatively cold, e.g. room temperature. Even if the relative humidity of the cold gas that is sucked into the packaging material would be high, e.g. close to 100% RH, the amount of water vapour that is sucked into the packaging material will be relatively low. Then, when the packaging material is heated S3 (e.g. in an isochoric process), the entrapped moist gas will be heated and its relative humidity will decrease.

In some embodiments, the package 2 is, in the chamber 4, subjected S4 to steam and/or water, during and/or after said raising S3 of the temperature and pressure. By using hot steam or water, the heat transfer is improved and the product contained in the package 2 may be heated more quickly, reducing the time needed for the retorting cycle. Using steam or water generally increases the risk of soggy packages why embodiments of the present disclosure may be particularly advantageous when steam or water is used.

In some embodiments, the package 2 is moved S5 in the chamber 4, e.g. by rotation and/or shaking, during and/or after said raising S3 of the temperature and pressure. Such moving S5 may improve the heat transfer to the product contained in the package 2, and make it more uniform over the package. However, such moving S2 may also increase the risk of sucking in moisture in the material 3 since movements in the material may further pump chamber atmosphere into the material why embodiments of the present disclosure may be particularly advantageous when the package is moved during retorting.

In some embodiments, the temperature is, in the chamber 4, reduced S6 from a third temperature T3 to a fourth temperature T4. Also, the pressure, in the chamber, is reduced S6 from a third pressure P3 to a fourth pressure P4, such that gas in the porous packaging material is subjected to a volume change (usually expansion) which is less than 50% by volume e.g. in a substantially isochoric process, after said raising S3 of the temperature and pressure. In this cooling phase, the temperature and pressure are reduced, for eventually, possibly after further phase(s) e.g. a final pressure reduction phase, reaching ambient/room temperature and pressure. In some embodiments the third temperature T3 may be substantially the same as the second temperature T2 and/or the fourth temperature T4 may be essentially the same as the first temperature T1 e.g. room temperature. However, it should be noted that any product enclosed in the package may lag behind e.g. 10-20°C during the cooling phase compared with the temperature in the chamber atmosphere, depending on the size of the package.

It may be advantageous to during the cooling phase S6 allow the gas in the packaging material 3 to gradually expand. However, if the pressure is decreased to fast, then there is a risk that the product in the package 2 (which may e.g. have a temperature of around 120-125°C before the cooling phase) starts boiling, and/or that gas which is trapped in the package material will expand, which may cause movements in the packaging material (transient effects that may cause gas/water to be sucked into the packaging material by a pumping effect, e.g. due to that creased and folded regions that contain much gas are subjected to compression/expansion cycles). In some cases, the expanding hot gas in the package may causes the package to burst, which is generally seen if the retorting process for some reason has to be interrupted during the high-temperature phase. It is therefore advantageous to retain a high (isochoric) pressure in the chamber to avoid such problems during the cooling phase. Such strategy may also make it possible to reduce the peak pressure during a retorting cycle.

The packaging material 3 is porous, thereby holding gas which may be compressed and thus suck in gas/liquid from the chamber, as discussed herein. In some embodiments, the porous material 3 is fibrous e.g. comprises a fibrous sheet 3a or layer in a laminate forming the packaging material 3. The fibrous sheet 3a may be a cellulose based sheet or layer such as comprising paper, paperboard or pressboard.

In some embodiments, the packaging material 3 is or comprises a laminate in which a porous or fibrous sheet 3a is laminated between an outer laminate layer 3b and/or an inner laminate layer 3c. Each of said outer and inner laminate layers may be a moisture barrier (including a water barrier) or be water resistant, forming a barrier to moisture and/or water. It should be noted that either of the inner and outer laminate layers may comprise one or several films, of the same or different materials. In some embodiments, the packaging material 3 is printed with a water soluble ink on a pigment coating between the porous/fibrous sheet 3a and the outer laminate layer 3b.

In some embodiments, the packaging material 3 comprises a pigment coating for printing with a water soluble ink. A pigment coating may be advantageous to improve printability e.g. of the porous/fibrous sheet 3a to allow printing thereon rather than on the outside of an outer laminate layer 3b. By printing on the pigment coating, below the outer polymer layer 3b, a water soluble ink may be used since the print is then protected by the outer polymer layer 3b. If instead printing is done on the outside of the outer laminate layer 3b, a water resistant ink has to be used since the print would otherwise be destroyed e.g. during retorting. Using a pigment coating and a water soluble ink for printing may be problematic for retortable packages 2 since the ink, and then typically also the pigment coating, is hydrophilic (or not hydrophobic as water resistant ink). This may increase the risk of too much moisture being sucked into the packaging material during retorting, leading to sogginess of the package, why embodiments of the present disclosure may be especially advantageous for use with packages of a packaging material comprising pigment coating and/or water soluble ink printing. Thus, embodiments of the present disclosure may reduce the risk of ink or pigment layer delamination in the packaging material.

In some embodiments, the second temperature T2 is within the range of from 110 to 150°C, e.g. from 110 to 135°C such as about 120°C or about 130°C. Different temperatures are used depending on (food) product type (e.g. pH), the desired shelf-life and the intended market (products supplied for hot countries may need tougher treatment, since such products are more likely to be stored in hot environments).

In some embodiments, the second pressure P2 is within the range of from 1 to 6 bar, e.g. from 3 to 5 bar such as about 4 bar or about 5 bar. A high range is given by what can be achieved in commercially available retorts, about 4-6 bar.

The time period during which high temperature (second and third temperatures T2 & T3) and pressure (second and third pressures P2 & P3) are maintained may vary e.g. depending on the size and size of the package 2, as well as e.g. the increased heat transfer obtained by steam/water and moving of the package, as discussed above. In some embodiments, the high temperature and pressure are maintained for at least 30 minutes, e.g. for between 30 minutes and 2 hours, such as for about one hour.

The present disclosure has mainly been described above with reference to a few embodiments. However, as is readily appreciated by a person skilled in the art, other embodiments than the ones disclosed above are equally possible within the scope of the present disclosure, as defined by the appended claims.

**Claims**

1.  A method for retorting a package (2) of a porous packaging material (3), the method comprising:

    providing (S1) the package in a chamber (4) of a retort (1); and
    in the chamber, raising (S3) the temperature, from a first temperature (T1) to a second temperature (T2), and the pressure, from a first pressure (P1) to a second pressure (P2), such that gas in the porous packaging material is subjected to a volume change which is less than 50% by volume.

2.  The method of claim 1, wherein the raising (S3) of the temperature and the pressure is done in a substantially isochoric process.

3.  The method of claim 1 or 2, further comprising:

    in the chamber (4), reducing (S6) the temperature, from a third temperature (T3) to a fourth temperature (T4), and the pressure, from a third pressure (P3) to a fourth pressure (P4), such that gas in the porous packaging material is subjected to a volume change which is less than 50% by volume e.g. in a substantially isochoric process, after said raising (S3) of the temperature and pressure.

4.  The method of any preceding claim, further comprising:

    in the chamber (4), subjecting (S4) the package (2) to steam and/or water, during and/or after said raising (S3) of the temperature and pressure.

5.  The method of any preceding claim, further comprising:

    moving (S5) the package (2) in the chamber (4), e.g. by rotation and/or shaking, during and/or after said raising (S3) of the temperature and pressure.

6.  The method of any preceding claim, wherein the first pressure is above ambient pressure, the method further comprising:

    in the chamber (4), raising (S2) the pressure from ambient pressure (P0) to the first pressure (P1) before the raising (S3) of the temperature from the first temperature (T1) to the second temperature (T2).

7.  The method of claim 6, wherein the raising (S2) of the pressure from ambient pressure (P0) to the first pressure (P1) is performed at constant temperature in the chamber (4), e.g. at the first temperature (T1).

8.  The method of any preceding claim, wherein the porous packaging material (3) comprises a fibrous sheet (3a), e.g. a cellulose-based sheet such as paper or paperboard.

9. The method of claim 8, wherein the packaging material (3) is a laminate in which the fibrous sheet (3a) is laminated between an outer laminate layer (3b) and an inner laminate layer (3c), each of said outer and inner laminate layers being a moisture barrier.

10. The method of claim 9, wherein the packaging material (3) is printed with a water soluble ink on a pigment coating between the fibrous sheet (3a) and the outer laminate layer (3b).

11. The method of any preceding claim, wherein the packaging material (3) comprises a pigment coating for printing with a water soluble ink.

12. The method of any preceding claim, wherein the second temperature (T2) is within the range of from 70 to 150°C, e.g. from 110 to 135°C.

13. The method of any preceding claim, wherein the second pressure (P2) is within the range of from 1 to 6 bar, e.g. from 3 to 5 bar.

14. A retort (1) for retorting a package (2) of a porous packaging material, the retort comprising:

processor circuitry (11); and
a storage (12) storing instructions (13) executable by said processor circuitry whereby said retort is operative to:

in a chamber (4) of the retort, raising the temperature, from a first temperature (T1) to a second temperature (T2), and the pressure, from a first pressure (P1) to a second pressure (P2), such that gas in the porous packaging material is subjected to a volume change which is less than 50% by volume.

Fig. 1

Fig. 2

Fig. 3a

Fig. 3b

Fig. 4a

Fig. 4b

Fig. 5

Fig. 6

Fig. 7

Fig. 8

Europäisches
Patentamt

European
Patent Office

Office européen
des brevets

## EUROPEAN SEARCH REPORT

Application Number

EP 16 17 2180

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/020722 A1 (KAMAI RYOICHI [JP]) 10 March 2005 (2005-03-10) | 14 | INV.<br>A23L3/10 |
| A | * abstract * | 1-13 | |
| X | JP H01 95754 A (FUJIMORI KOGYO CO) 13 April 1989 (1989-04-13) | 14 | |
| A | * abstract * | 1-13 | |
| X | JP S64 51070 A (UENO HIROSHI) 27 February 1989 (1989-02-27) | 14 | |
| A | * abstract * | 1-13 | |
| X | US 5 283 033 A (DODRILL ROBERT K [US]) 1 February 1994 (1994-02-01) | 14 | |
| A | * abstract * | 1-13 | |
| A,D | WO 2004/056666 A1 (TETRA LAVAL HOLDINGS & FINANCE [CH]; CHRISTENSEN AKSEL [SE]; EKSTROEM) 8 July 2004 (2004-07-08) * page 1, lines 4-6; claim 1 * | 1-14 | |
| | | | TECHNICAL FIELDS SEARCHED (IPC) |
| | | | A23L<br>A61L |

The present search report has been drawn up for all claims

| Place of search | Date of completion of the search | Examiner |
|---|---|---|
| Munich | 5 October 2016 | Saunders, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 
& : member of the same patent family, corresponding
document

EPO FORM 1503 03.82 (P04C01)

EP 3 251 524 A1

## ANNEX TO THE EUROPEAN SEARCH REPORT
## ON EUROPEAN PATENT APPLICATION NO.

EP 16 17 2180

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2016

| Patent document cited in search report | | Publication date | Patent family member(s) | | Publication date |
|---|---|---|---|---|---|
| WO 2005020722 | A1 | 10-03-2005 | JP | 3799055 B2 | 19-07-2006 |
| | | | WO | 2005020722 A1 | 10-03-2005 |
| JP H0195754 | A | 13-04-1989 | JP | 3067776 B2 | 24-07-2000 |
| | | | JP | H0195754 A | 13-04-1989 |
| JP S6451070 | A | 27-02-1989 | NONE | | |
| US 5283033 | A | 01-02-1994 | NONE | | |
| WO 2004056666 | A1 | 08-07-2004 | AU | 2003303193 A1 | 14-07-2004 |
| | | | BR | 0316511 A | 04-10-2005 |
| | | | CN | 1729126 A | 01-02-2006 |
| | | | DE | 60307892 T2 | 14-12-2006 |
| | | | EP | 1578671 A1 | 28-09-2005 |
| | | | ES | 2266921 T3 | 01-03-2007 |
| | | | JP | 4494216 B2 | 30-06-2010 |
| | | | JP | 2006510380 A | 30-03-2006 |
| | | | SE | 0203862 A | 27-04-2004 |
| | | | US | 2006051235 A1 | 09-03-2006 |
| | | | WO | 2004056666 A1 | 08-07-2004 |

EPO FORM P0459

For more details about this annex : see Official Journal of the European Patent Office, No. 12/82

**EP 3 251 524 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 1998016431 A
- WO 2004056666 A
- WO 2006108812 A